# EUROPEAN PATENT SPECIFICATION

(11) **EP 2 251 263 B1**
(45) Date of publication and mention of the grant of the patent: **14.03.2012**
(21) Application number: 10160634.1
(22) Date of filing: 21.04.2010
(51) Int. Cl.: B64G 1/28, B64G 1/38, F16F 15/315

(54) **Rotor assembly having integral damping member for deployment within momentum control device**
Rotoranordnung mit integriertem Dämpfungsglied zur Anwendung in einer Drehmomentsteuerungsvorrichtung
Ensemble de rotor doté d'un élément amortisseur intégré pour le déploiement dans un dispositif de contrôle de la quantité de mouvement

(30) Priority: 30.04.2009 US 433726
(43) Date of publication of application: 17.11.2010
(73) Proprietor: Honeywell International Inc., Morristown, NJ 07962 (US)
(72) Inventor: Johnson, Theodis, Morristown, NJ 07962-2245 (US)
(74) Representative: Buckley, Guy Julian

(56) References cited:
- US-A- 3 980 358
- US-A1- 2002 063 368
- DATABASE WPI Week 200615 Thomson Scientific, London, GB; AN 2006-141383 XP002592547 -& JP 2006 038209 A (MITSUBISHI PRECISION CO LTD) 9 February 2006 (2006-02-09)

## Description

### TECHNICAL FIELD

The present invention relates generally to momentum control devices, such as reaction wheels and control moment gyroscopes; and, more particularly, to a rotor assembly having at least one integral damping member suitable for deployment within a momentum control device.

### BACKGROUND

Momentum control devices, most notably control moment gyroscopes and reaction wheels, are commonly deployed aboard spacecraft (and certain other vehicles) within attitude control systems. A generalized moment control device includes a rotor assembly rotatably mounted within a rotor assembly housing. The rotor assembly includes an inertial element, typically an outer rim, which is fixedly coupled to a rotor shaft. The first end of the rotor shaft (the "fixed end" of the rotor shaft) is mounted within a first bore provided within the rotor assembly housing such that the first end can rotate, but is otherwise confined, relative to the rotor assembly housing. The second end of the rotor shaft (the "floating end" of the rotor shaft) is suspended within a second bore provided in the rotor assembly such that the second end is able to move axially and radially within certain limits, as well as rotate, relative to the rotor assembly housing. A bearing (e.g., a duplex-pair ball bearing) is disposed over each shaft end to facilitate rotation of the rotor assembly. If the momentum control device assumes the form of a reaction wheel, the rotor assembly housing may be directly mounted to the spacecraft. If the momentum control device assumes the form of a control moment gyroscope ("CMG"), the rotor assembly housing is rotatably disposed within an outer stator housing (e.g., a basering structure), which is, in turn, mounted to the spacecraft.

During operation of a momentum control device, a spin motor causes the rotor assembly to rotate about a spin axis. As the rotor assembly rotates, vibrations may be induced within the momentum control device due to static imbalance of the rotor assembly, dynamic imbalance of the rotor assembly, or structural imperfections in the components of the momentum control device (e.g., the spin bearings). When transmitted from the momentum control device to the spacecraft, such induced vibrations may result in emitted disturbances that can negatively impact the performance of the spacecraft; e.g., emitted disturbances can compromise the pointing accuracy of a telescope or other such instrument deployed aboard a satellite. Considerable vibratory forces may also be transmitted from the spacecraft to the rotor assembly during spacecraft launch. Therefore, to reduce emitted disturbances and to help protect a momentum control device during launch, a compliant or attenuating mounting device may be disposed between the momentum control device and the spacecraft's mounting interface. Such compliant or attenuating mounting devices range in effectiveness and complexity from relatively simple rubber mounting members, to passive dampers, to active isolation systems. However, due largely to their external disposition between the momentum control devices and the host spacecraft, such mounting devices tend to be undesirably bulky and weighty for deployment aboard a spacecraft.

Considering the foregoing, it is desirable to provide a rotor assembly for deployment within a momentum control device that reduces or eliminates the transmission of vibratory forces between the rotor assembly and the host spacecraft (or other host vehicle). Ideally, such a rotor assembly would include at least one damping member integral to the momentum control device to minimize the overall weight and envelope of the host momentum control device. Other desirable features and characteristics of embodiments of the present invention will become apparent from the subsequent Detailed Description and the appended Claims, taken in conjunction with the accompanying drawings and the foregoing Background.
[0004A] US patent 3980358 discloses a floating bearing having a stationary member and an axially translating member including a pair of O-rings which in combination with surfaces of the movable member and the stationary member define a contained space. This space is further subdivided by an extension of a surface of either the translating member or the stationary member to form two chambers substantially enclosed but connected through a restricted space formed by the extremity of the extension and a proximate opposing surface of the other member. The chambers are substantially filled with a viscous fluid which provides damping of axial displacements of said movable member relative to said stationary member produced in vibratory environments.

### BRIEF SUMMARY

In accordance with the present invention, there is provided a rotor assembly for deployment within a momentum control device as claimed in any of the accompanying claims.

### BRIEF DESCRIPTION OF THE DRAWINGS

At least one example of the present invention will hereinafter be described in conjunction with the following figures, wherein like numerals denote like elements, and:

FIG. 1 is a cross-sectional view of a reaction wheel in accordance with the teachings of prior art;

FIGs. 2 and 3 are exploded and cross-sectional views, respectively, of a rotor assembly (partially shown) including a radially-compliant damping member in accordance with a first exemplary embodiment;

FIG. 4 is an isometric view of a rotor assembly (partially shown) including a radially-compliant damping member in accordance with a second exemplary embodiment;

FIGs. 5 and 6 are top and cross-sectional views, respectively, of a radially-compliant damping member suitable for deployment within a rotor assembly;

FIG. 7 is a top view of a radially-compliant damping member suitable for deployment within a rotor assembly;

FIG. 8 is an isometric cutaway view of the damping member shown in FIG. 7 deployed within a rotor assembly (partially shown);

FIGs. 9 and 10 are side and top views, respectively, of a radially-compliant damping member suitable for deployment within a rotor assembly;

FIG. 11 is an isometric cutaway view of the damping member shown in FIGs. 9 and 10 deployed within a rotor assembly (partially shown);

FIG. 12 is a cross-sectional view of a portion of a momentum control device including an elastomeric damping member; and

FIG. 13 is an isometric view of the elastomeric damping member illustrated in FIG. 12.

### DETAILED DESCRIPTION

The following Detailed Description is merely exemplary in nature and is not intended to limit the invention or the application and uses of the invention. Furthermore, there is no intention to be bound by any theory presented in the preceding Background or the following Detailed Description. Although the following describes several exemplary embodiments of a rotor assembly including at least one radially-compliant damping member in the context of a reaction wheel, it will be appreciated that embodiments of the rotor assembly may be deployed in various other momentum control devices, including control moment gyroscopes.

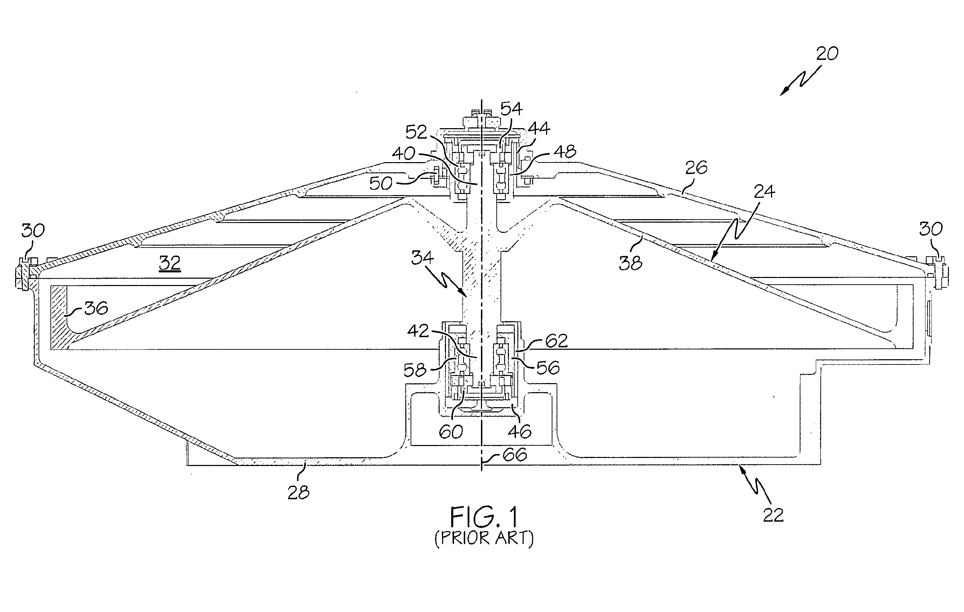

FIG. 1 is cross-sectional view of a reaction wheel **20** in accordance with the teachings of prior art. Reaction wheel **20** includes a rotor assembly housing **22** and a rotor assembly **24,** which is rotatably mounted within rotor assembly housing **22.** With reference to the orientation shown in FIG. 1, rotor assembly housing **22** includes an upper cover **26** and a lower casing **28,** which is fixedly joined to upper cover **26** utilizing a plurality of threaded fasteners **30.** Collectively, upper cover **26** and lower casing **28** define an internal cavity **32,** which houses rotor assembly **24** and various other components of reaction wheel **20** that are conventionally known and not described herein in the interests of concision (e.g., a spin motor, a resolver or other rotational sensor, etc.). Rotor assembly **24** includes a rotor shaft **34** and a rotor rim **36,** which is joined to rotor shaft **34** via a suspension web **38.** Rotor shaft **34** has a fixed end portion **40** (the upper end portion of shaft **34** in the illustrated orientation) and a floating end portion **42** (the lower end portion of shaft **34** in the illustrated orientation). Fixed end portion **40** and floating end portion **42** are received within first and second annuli **44** and **46,** respectively, provided within rotor assembly housing **22.** A fixed bearing cartridge **48** is disposed around fixed end portion **40** of rotor shaft **34** and fixedly attached to upper cover **26** by a plurality of threaded fasteners **50** (only one of which is shown in FIG. 1). Fixed bearing cartridge **48** includes a spin bearing **52** (e.g., a duplex-pair ball bearing), which is disposed around fixed end portion **40** to facilitate the rotation of rotor shaft **34.** A first nut **54** is threadably coupled to fixed end portion 40 and generally retains bearing **52** thereon. Similarly, a floating bearing cartridge **56** is disposed around floating end portion **42** of rotor shaft **34** and includes a spin bearing **58** (e.g., a duplex-pair ball bearing), which is retained on end portion **42** by a second nut **60.** A floating cartridge sleeve **62** is disposed around floating bearing cartridge **56** and affixed to the inner structure of lower casing **28** defining annulus **46.** Notably, sleeve **62** is spatially offset from floating bearing cartridge **56** by a small annular gap to permit floating bearing cartridge **56,** and therefore floating end portion **42** of rotor shaft **34,** to move radially and axially during operation of reaction wheel **20.** Such freedom of movement helps to accommodate expansion and contraction that may occur between components (e.g., floating cartridge **56** and floating sleeve **62)** over the operational temperature and vacuum range of reaction wheel **20.**

During operation of reaction wheel **20,** a spin motor (not shown) rotates rotor assembly **24** about a spin axis (represented in FIG. 1 by dashed line **66**). As rotor assembly **24** rotates, induced vibrations may occur within reaction wheel **20** due to static imbalance of rotor assembly **24,** dynamic imbalance of rotor assembly **24,** or structural imperfections within spin bearings **52** and **58** or other components of reaction wheel **20.** When transmitted from reaction wheel **20** to a host spacecraft, such induced vibrations may result in emitted disturbances that can negatively impact the performance of the spacecraft as previously described. Therefore, to reduce or eliminate emitted disturbances, and to further protect rotor assembly **24** from vibratory forces during spacecraft launch, the following describes several exemplary embodiments of a radially-compliant damping member that may be disposed around or adjacent to floating end portion **42** of rotor shaft **34,** and an exemplary embodiment of an elastomeric damping member that may be disposed around fixed end portion **40** of rotor shaft **34,** to minimize the transmission of vibratory forces between rotor assembly **24** and rotor assembly housing **22.** Notably, each of the exemplary damping members described below is integral to the host momentum control device (e.g., reaction wheel **20,** as modified by inclusion of an embodiment of the novel rotor assembly described below; or another momentum control device, such as a control moment gyroscope). Consequently, relative to conventional compliant or attenuating mounting systems disposed external to the host momentum control device, embodiments of the damping members achieve highly effective damping without significantly increasing the overall weight and envelope of the host momentum control device.

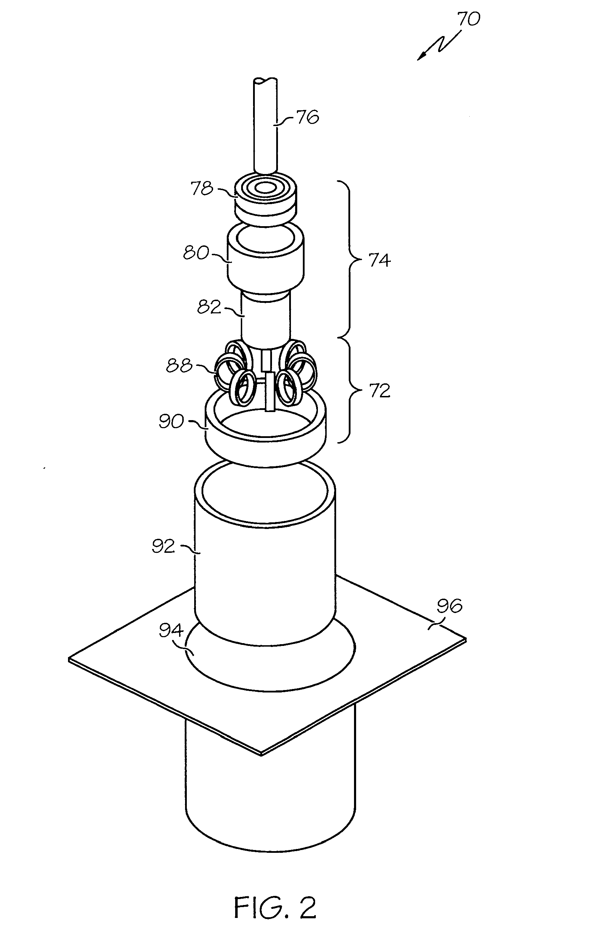

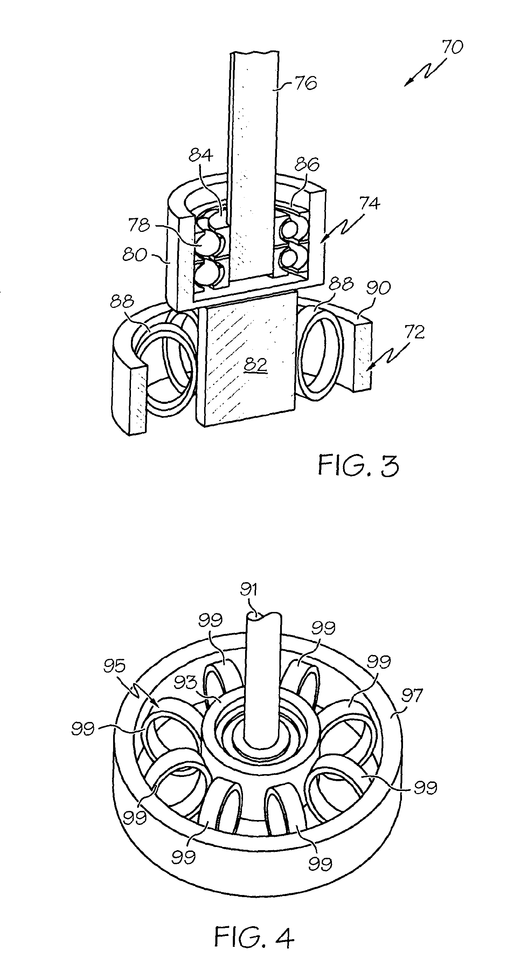

FIGs. 2 and 3 are exploded and cross-sectional views, respectively, of a rotor assembly **70** including a radially-compliant damping member **72** in accordance with a first exemplary embodiment. Rotor assembly **70** comprises a floating bearing cartridge **74** and a rotor shaft **76,** only the floating end portion of which is shown. In the illustrated example, floating bearing cartridge **74** includes a spin bearing **78** (e.g., a duplex-pair ball bearing), a cartridge casing **80,** and an axial cartridge extension **82.** As shown most clearly in FIG. 3, when rotor assembly **70** is assembled, the floating end portion of rotor shaft **76** is received within bearing **78,** which is, in turn, received within bearing cartridge casing **80.** More specifically, the inner rings of bearing **78** (identified in FIG. 3 at **84**) are fixedly coupled to the floating end portion of rotor shaft **76,** and the outer rings of bearing **78** (identified in FIG. 3 at **86**) are fixedly coupled to the inner surface of cartridge casing **80.** As is well-known, a plurality of rolling elements (e.g., ball bearings, cylindrical rollers, or the like) is disposed between inner rings **84** and outer rings **86** of spin bearing **78.** Axial cartridge extension **82** is fixedly coupled to the outer terminal end of cartridge casing **80** and extends axially therefrom. Axial cartridge extension **82** may be fixedly coupled to the cartridge casing **80** utilizing a one or more fasteners (not shown), utilizing a threaded interface, or utilizing another suitable coupling means (e.g., welding). Alternatively, axial cartridge extension **82** may be integrally formed with cartridge casing **80** as a unitary machined piece. Although axial cartridge extension **82** is illustrated as a solid shaft in FIGs. 2 and 3, axial cartridge extension **82** may assume other forms in alternative embodiments, such as a hollow shaft.

In the exemplary embodiment illustrated in FIGs. 2 and 3, radially-compliant damping member **72** includes a plurality of flexures **88** and a retaining ring **90.** Flexures **88** are spaced around the inner circumferential surface of retaining ring **90** and extend radially inward therefrom. When rotor assembly **70** is assembled as shown in FIG. 3, flexures **88** are compressed between retaining ring **90** and axial cartridge extension **82** of floating bearing cartridge **74.** Also, when rotor assembly **70** is assembled, retaining ring **90** is fixedly coupled to a mounting structure provided in a rotor assembly housing **96** (partially shown in FIG. 2). For example, and as indicated in FIG. 2, retaining ring **90** may be affixed to a tubular sleeve **92,** which is, in turn, fixedly disposed within an annulus or bore **94** provided in rotor assembly housing **96.** Flexures **88** may be formed from any suitable material including various metals and alloys, such as a beryllium copper alloy.

In the illustrated example, flexures **88** each assume the form of a substantially annular spring member. Flexures **88** are radially-compliant. Thus, flexures **88** help to reduce the transmission of vibratory forces from rotor shaft **76** to rotor assembly housing **96** and, therefore, the host spacecraft. Conversely, flexures **88** reduce the transmission of vibratory forces from rotor assembly housing **96** to rotor shaft **76** to help protect rotor assembly **70** from mechanical stressors during spacecraft launch. In addition, due to their annular shape, flexures **88** are able to roll between retaining ring **90** and floating bearing cartridge **74** to provide axial damping between floating bearing cartridge **74** and rotor assembly housing **96.** Although not shown in FIGs. 2 and 3 for clarity, longitudinal channels may be provided in the outer circumferential surface of axial cartridge extension **82** and/or the inner circumferential surface of retaining ring **90** to guide the rolling movement of flexures **88** and accommodate flexure preload. Relative to conventional momentum control device, such as reaction wheel **20** (FIG. 1), the inner diameters of sleeve **92** and bore **94** are only slightly increased to accommodate radially-compliant damping member **72.** Radially-compliant damping member **72** thus achieves effective isolation of the rotor assembly without adding significant bulk or weight to the host momentum control device.

There has thus been provided a first example of a rotor assembly including a radially-compliant damping member that reduces the transmission of vibratory forces from the floating bearing cartridge to the rotor assembly housing to reduce emitted disturbances during operation of the momentum control device. In the above-described exemplary embodiment, the radially-compliant damping member is disposed around a cartridge extension that projects axially from the floating bearing cartage casing; however, in alternative embodiments, the radially-compliant damping member may be disposed at various other locations, providing that the damping member is mechanically coupled between the floating bearing cartridge and the rotor assembly housing, as taken along an emitted disturbance path. Further emphasizing this point, FIG. 4 is an isometric view of the floating end portion of a rotor shaft **91,** a floating bearing cartridge **93** disposed around the floating end portion of rotor shaft **91,** and a radially-compliant damping member **95** disposed around floating bearing cartridge **93.** Radially-compliant damping member **95** is substantially identical to radially-compliant damping member **72** (FIGs. 2 and 3); e.g., radially-complaint damping member **95** includes a retaining ring **97** and a plurality of flexures **99,** which are spaced around the inner circumferential surface of retaining ring **97** and extend radially inward therefrom. Again, flexures **99** each assume the form of a substantially annular spring member; however, in this example, flexures **99** are compressed between retaining ring **97** and the casing of floating bearing cartridge **93.** As noted above, flexures **99** are radially-compliant to provide radial damping between floating bearing cartridge **93** and the rotor assembly housing (e.g., rotor assembly housing **96** shown in FIG. 2), and flexures **99** are permitted to roll between retaining ring **97** and the casing of floating bearing cartridge **93** to provide axial damping between floating bearing cartridge **93** and the rotor assembly housing.

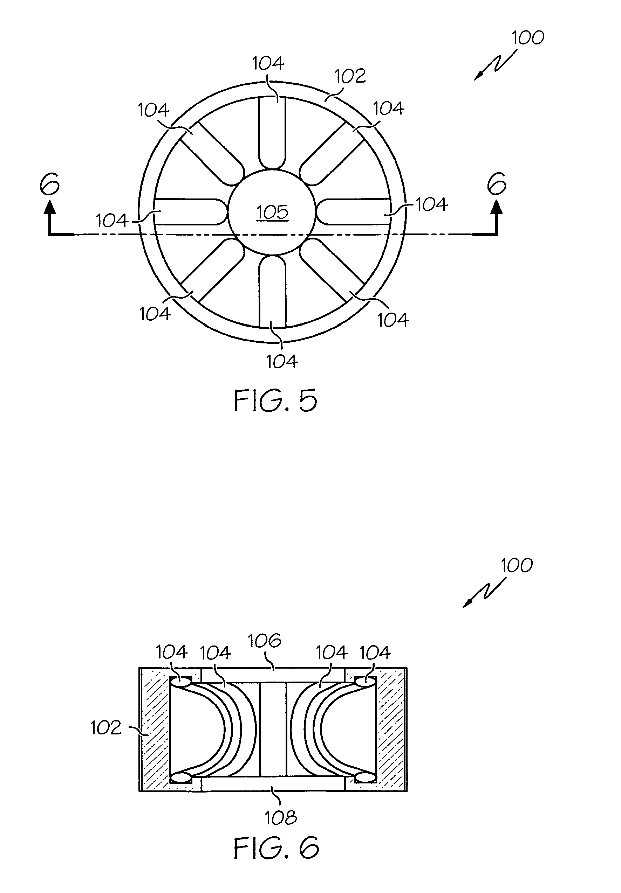

FIGs. 5 is a top view of a radially-compliant damping member **100**, and FIG. 6 is a cross-sectional view of radially-compliant damping member **100** taken along line 6-6 (labeled in FIG. 5). In many respects, radially-compliant damping member **100** is similar to damping member **72** described above in conjunction with FIGs. 2 and 3 and to damping member **95** described above in conjunction with FIG. 4. For example, radially-compliant damping member **100** includes a retaining ring **102** and a plurality of flexures **104,** which are spaced around the inner circumferential surface of retaining ring **102** and extend radially inward therefrom. When radially-compliant damping member **100** is deployed within a rotor assembly, flexures **104** may be compressed between retaining ring **102** and a floating bearing cartridge (represented generically in FIG. 5 by circle **105);** e.g., flexures **104** may be compressed between retaining ring **102** and a cartridge extension of the floating bearing cartage as generally described above in conjunction with FIGs. 2 and 3, or flexures **104** may be compressed between retaining ring **102** and the casing of a floating bearing cartridge as generally described above in conjunction with FIG. 4. However, in contrast to the flexures of damping members **72** and **95,** flexures **104** of radially-compliant damping member **100** assume the form of curved (e.g., C-shaped) spring members, which are generally captured by retaining ring **102.** More specifically, and with reference to FIG. 6, retaining ring **102** is formed to have first and second flanges **106** and **108** that extend radially inward therefrom. Flanges **106** and **108** each include a lip that defines annular groove within the inner surface of retaining ring **102.** The annular grooves defined by flanges **106** and **108** receive opposing ends of each flexure **104** to capture flexures **104** in an axially-compressed state such that flexures **104** bulge radially inward to contact the floating bearing cartridge. As shown in FIG. 6, each end of flexure **104** may have a bulbous shape to help retain flexures **104** within the annular grooves define by flanges **106** and **108.**

As was the case with the flexures of damping member **72** and **95,** flexures **104** of damping member **100** are radially-compliant. Thus, flexures **104** help to reduce the transmission of vibratory forces between a floating bearing cartridge disposed within or adjacent to damping member **100** (again, represented in FIG. 5 by circle **105)** and the rotor assembly housing (not shown). However, in contrast to the flexures of damping member **72** and **95,** flexures **104** of damping member **100** do not roll; instead, flexures **104** may frictionally slide relative to the floating bearing cartridge. The controlled sliding action of flexures **104** provides further axial damping between the floating bearing cartridge and the rotor assembly housing to further reduce emitted disturbances during the operation of the host momentum control device.

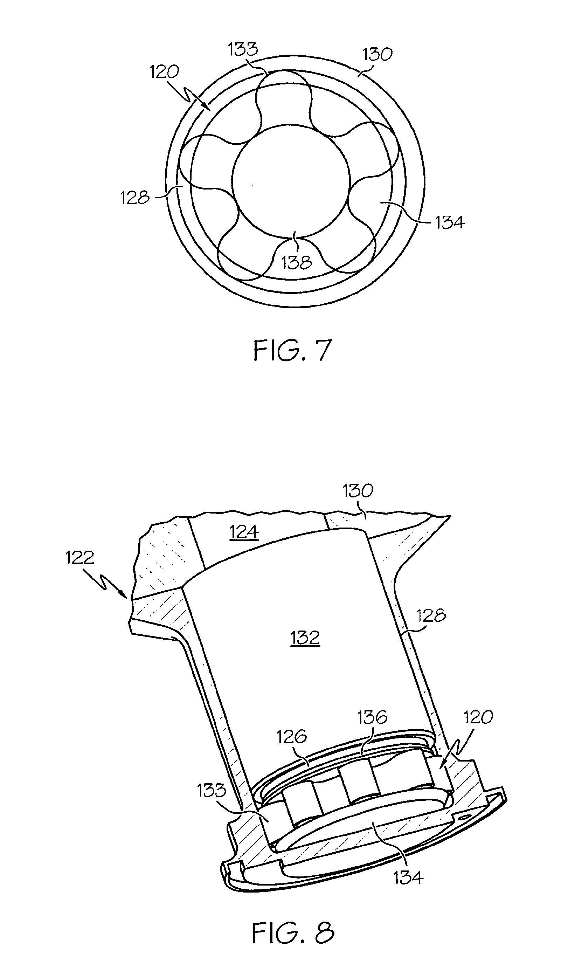

FIG. 7 is a top view of a radially-compliant damping member **120** suitable for deployment within a rotor assembly, and FIG. 8 is an isometric cutaway view of damping member **120** deployed within a rotor assembly **122.** Rotor assembly **122** is partially shown in FIG. 8 as including the floating end portion of a rotor shaft **124** and a floating bearing cartridge **126,** which is disposed around the floating end portion of rotor shaft **124** to facilitate the rotational movement thereof. The floating end portion of rotor shaft **124** and floating bearing cartridge **126** are each received within an annulus or bore **128** provided within a rotor assembly housing **130** (only partially shown). A sleeve **132** is fixedly mounted within bore **128** and circumscribes floating bearing cartridge **126.** Floating bearing cartridge **126** is separated from the inner walls of sleeve **132** by an annular gap to permit floating bearing cartridge, and thus rotor shaft **124,** to move axially and radially during operation of the host momentum control device.

With continued reference to FIGs. 7 and 8, radially-compliant damping member **120** includes an annular spring member **133,** a retaining base **134,** a retaining cap **136** (identified in FIG. 8), and a central post **138** (identified in FIG. 7), which extends from retaining base **134** to retaining cap **136.** Annular spring member **133** is disposed around central post **138** and between retaining cap **136** and retaining base **134.** Retaining base **134,** retaining cap **136** (FIG. 8), and central post **138** (FIG. 7) collectively form a rigid body that maintains annular spring member **133** in a desired position. Retaining cap **136** is fixedly attached to the terminal end of floating bearing cartridge **126** utilizing, for example, a plurality of fasteners (not shown), a threaded interface, or other suitable fastening means. Radially-compliant damping member **120** is thus disposed adjacent and axial to the terminal end of floating bearing cartridge **126.**

In FIGs. 7 and 8, annular spring member **133** assumes the form of a multi-lobed ribbon. The major outer diameter of annular spring member **133** is greater than the outer diameters of retaining base **134,** of retaining cap **136,** and of floating bearing cartridge **126.** Thus, as indicated in FIG. 8, annular spring member **133** extends radially beyond retaining base **134** and retaining cap **136** to contact the inner walls of bore **128.** Annular spring member **133** consequently reduces the transmission of vibratory forces between floating bearing cartridge **126,** and therefore rotor shaft **124,** and rotor assembly housing **130.** Annular spring member **133** is configured to slide axially relative to floating cartridge **126** within bore **128** to provide additional axial damping. If desired, the terminal end portions of annular spring member **133** may taper radially inward to prevent gouging of the inner walls of bore **128.** As indicated above, annular spring member **133** may be formed from any suitable resilient material including various metals and alloys, such as a beryllium copper alloy.

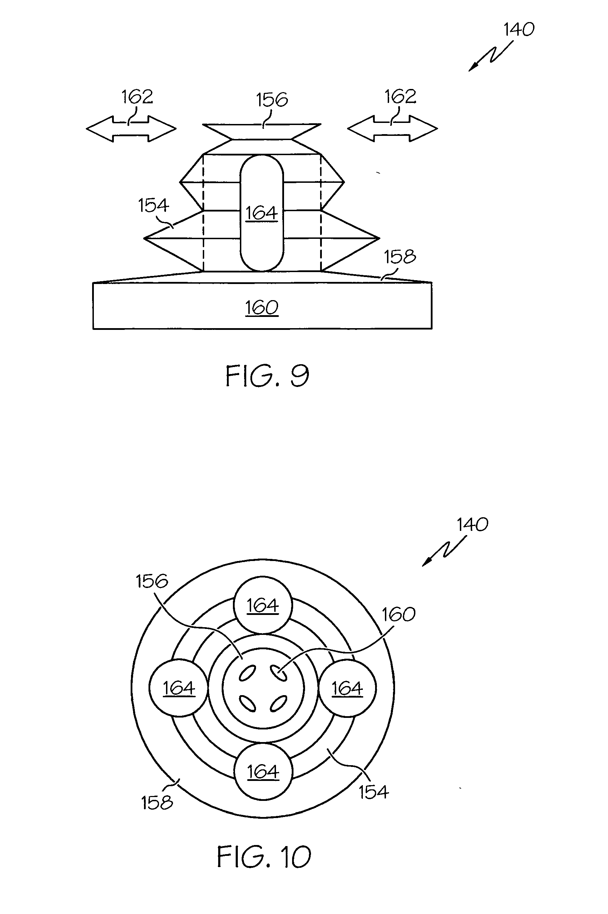

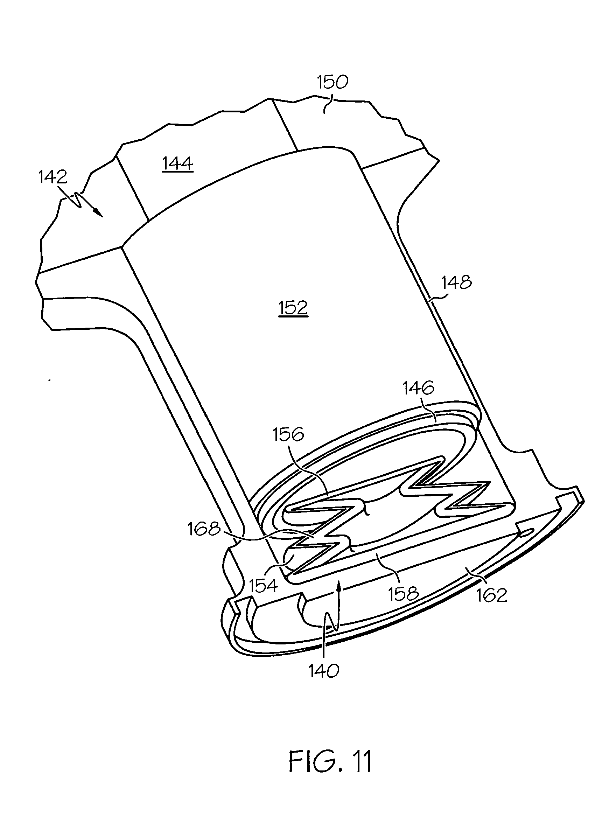

FIGs. 9 and 10 are side and top views, respectively, of a radially-compliant damping member **140** suitable for deployment within a rotor assembly; and FIG. 11 is an isometric cutaway view of damping member **140** deployed within a rotor assembly **142.** Rotor assembly **142** is partially shown in FIG. 11 as including the floating end portion of a rotor shaft **144** and a floating bearing cartridge **146** fixedly mounted around the floating end portion of rotor shaft **144.** The floating end portion of rotor shaft **144** and floating bearing cartridge **146** are each received within an annulus or bore **148** provided within a rotor assembly housing **150** (only partially shown). A sleeve **152** is also fixedly mounted within bore **148** and circumscribes floating bearing cartridge **146.** As noted above, floating bearing cartridge **146** is separated from the inner walls of sleeve **152** by a small annular gap.

In FIGs. 9-11, radially-compliant damping member **140** comprises an axially-compressible spring member, namely, a bellows **154** having an upper end portion **156** and a lower end portion **158.** Bellows **154** is disposed adjacent and axial to floating bearing cartridge **146.** As shown most clearly in FIG. 10, upper end portion **156** may include a plurality of apertures **160** therethrough, which permits bellows **154** to be attached to the terminal end of floating bearing cartridge **146** utilizing a plurality of non-illustrated fasteners. This example notwithstanding, bellows **154** may be joined to floating bearing cartridge **146** utilizing other coupling means, such as a threaded interface. In a similar manner, lower end portion **158** of bellows **154** may be fixedly mounted to rotor assembly housing **150,** and specifically to the floor of bore **148** (illustrated generically in FIG. 9 at **160**), utilizing a plurality of fasteners, a threaded interface, or any other suitable mounting means. When rotor assembly **142** is assembled, bellows **154** is axially compressed between floating bearing cartridge **146** and the floor of bore **148.** As can be appreciated most easily in FIG. 9, bellows **154** tapers radially inward from lower end portion **158** to upper end portion **156;** as a result, bellows **154** is permitted to move axially within bore **148** along with floating bearing cartridge **146** and rotor shaft **144** (indicated in FIG. 9 by arrows **162**). Bellows **154** is thus generally permitted to move in all degrees of freedom and consequently provides both radial and axial damping to reduce the transmission of vibratory forces between floating bearing cartridge **146** (and therefore rotor shaft **144**) and rotor assembly housing **150.**

As indicated in FIGs. 9 and 10, one or more apertures **164** may be formed (e.g., laser cut) through the sidewalls of bellows **154** to tune the dampening characteristics of bellows **154** to a desired range of vibrational modes. To further increase the damping characteristics of bellows **154,** an elastomeric coating (e.g., a polymeric coating, such as rubber) may be applied to one or more surfaces of bellows **154.** For example, a conformal elastomeric coating may be applied over the inner surface of bellows **154** as generally shown in FIG. 11 at **168**. In contrast, the main body of bellows **154** may be formed from a metal or alloy (e.g., a beryllium copper alloy). In alternative embodiments, bellows **154** may be closed such that the gaseous pressure within bellows **154** may differ from ambient.

It should thus be appreciated that there has been provided multiple exemplary embodiments of the a rotor assembly suitable for deployment within a momentum control device (e.g., a reaction wheel or a control moment gyroscope) that reduces or eliminates the transmission of vibratory forces between the rotor assembly and the host spacecraft (or other vehicle on which the momentum control device is deployed) to reduce emitted disturbances during operation of the momentum control device. It should further be appreciated that, in each of the foregoing exemplary embodiments, the radially-compliant damping member is integrated into to the momentum control device and consequently minimizes the overall weight and envelope of the momentum control device relative to conventional momentum control devices employing compliant and attenuation mounts.

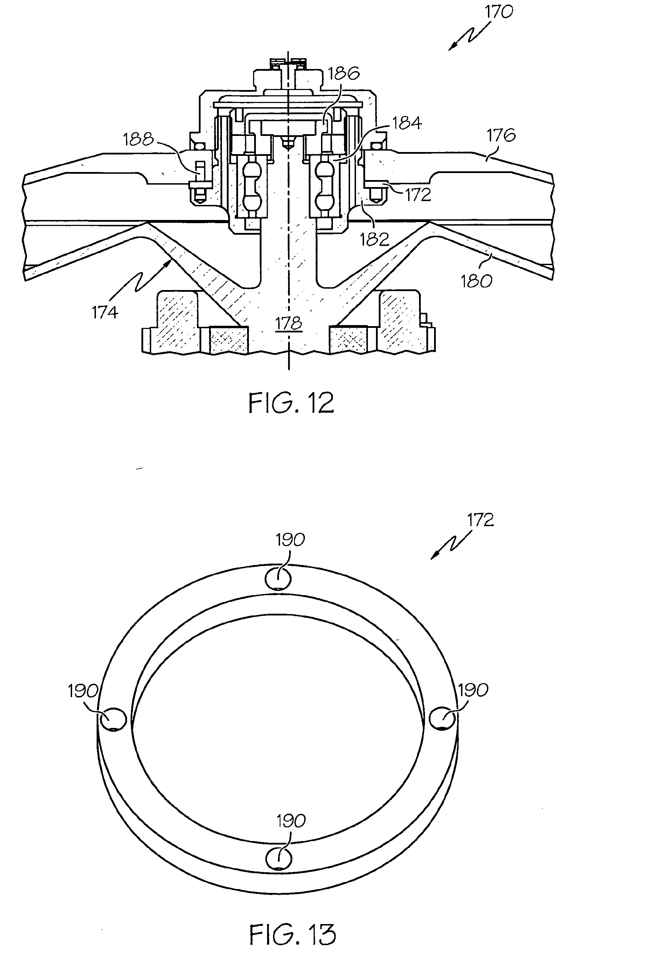

In each of the foregoing examples, the radially-compliant damping member was disposed around or adjacent to the floating end portion of a rotor shaft. Examples may include an elastomeric damping member disposed around the fixed end portion of the rotor shaft in addition to, or in lieu of, a radially-compliant damping member disposed around or adjacent to the floating end portion of the rotor shaft. Further illustrating this point, FIG. 12 is a cross-sectional view of a portion of a momentum control device **170** (e.g., a reaction wheel) including a elastomeric damping member **172;** and FIG. 13 is an isometric view of elastomeric damping member **172.** Momentum control device **170** includes a rotor assembly **174** rotatably mounted within a rotor assembly housing **176.** Rotor assembly **174** comprises a rotor shaft **178** (partially shown), a suspension web **180** (partially shown), and a fixed bearing cartridge **182.** Fixed bearing cartridge **182** includes a bearing **184** (e.g., a duplex-pair ball bearing), which is disposed around the fixed end portion of rotor shaft **178.** Bearing **184** is generally retained around fixed end portion of rotor shaft **178** by a wing nut **186** threadably coupled to rotor shaft **178.** The casing of fixed bearing cartridge **182** is fixedly mounted to an inner portion of rotor assembly housing **176** utilizing a plurality of fasteners **188** (only one of which is shown in FIG. 12). In the illustrated example, elastomeric damping member **172** assumes the form of an annular elastomeric body, which is disposed between the casing of fixed bearing cartridge **182** and the inner portion of rotor assembly **174.** As shown in FIG. 13, elastomeric damping member **172** may include a plurality of apertures **190** therethrough to accommodate fasteners **188.** Due to its elastomeric properties, damping member **172** helps to reduce the transmission of vibratory forces between fixed bearing cartridge **182** and rotor assembly housing **176** to reduce emitted disturbances during operation of momentum control device **170.** Although, in the illustrated example, elastomeric damping member **172** assumes a relatively simple annular form, the particular geometric form of damping member **172** will inevitably vary amongst different embodiment; for example, elastomeric damping member **172** may include a raised inner portion (e.g., a raised inner collar) that extends axially from the main body of damping member **172** to contact fixed bearing cartridge **182** or an inner surface of rotor assembly housing **176.**

While at least one exemplary embodiment has been presented in the foregoing Detailed Description, it should be appreciated that a vast number of variations exist. It should also be appreciated that the exemplary embodiment or exemplary embodiments are only examples, and are not intended to limit the scope, applicability, or configuration of the invention in any way. Rather, the foregoing Detailed Description will provide those skilled in the art with a convenient road map for implementing an exemplary embodiment of the invention. It being understood that various changes may be made in the function and arrangement of elements described in an exemplary embodiment without departing from the scope of the invention as set-forth in the appended claims.

## Claims

1. A rotor assembly (70, 122, 142, 174) for deployment within a momentum control device (20, 170) including a rotor assembly housing (22, 96, 130, 150, 176), the rotor assembly comprising:
a rotor shaft (34, 76, 91, 124, 144, 178) rotatably mounted within the rotor assembly housing;
a floating bearing cartridge (56, 74, 93, 105, 126, 146) disposed around a first end portion of the rotor shaft; and
a radially-compliant damping member (72, 95, 100, 120, 140) mechanically coupled between the floating bearing cartridge and the rotor assembly housing, as taken along an emitted disturbance path,
wherein the radially-compliant damping member (72, 95, 100, 120, 140) comprises
a retaining ring (90, 97, 102) fixedly coupled to the rotor assembly housing (22, 96, 130, 150, 176); **characterized in that** the radially-compliant damping member further comprises
a plurality of substantially annular spring members (88, 99) dispersed around an inner circumference of the retaining ring (90, 97, 102), compressed between the retaining ring and the floating bearing cartridge (56, 74, 93, 105, 126, 146) and configured to roll between the retaining ring (90, 97, 102) and the floating bearing cartridge (56, 74, 93, 105, 126, 146) to provide axial damping between the floating bearing cartridge and the rotor assembly housing (22, 96, 130, 150, 176) during operation of the momentum control device.

2. A rotor assembly (70, 122, 142, 174) according to Claim 1 wherein the radially-compliant damping member (72, 95, 100, 120, 140) is disposed around the floating bearing cartridge (56, 74, 93, 105, 126, 146).

3. A rotor assembly (70, 122, 142, 174) according to Claim 1 wherein the floating bearing cartridge (56, 74, 93, 105, 126, 146) comprises: a bearing (58, 78, 184), comprising:
an inner ring (84) fixedly coupled to the first end portion of the rotor shaft (34, 76, 91, 124, 144, 178);
an outer ring (86) generally circumscribing the inner ring; and
a plurality of rolling elements (78) disposed between the inner ring and the outer ring;
and
an axial cartridge extension (82) fixedly coupled to the outer ring, the radially-compliant damping member (72, 95, 100, 120, 140) disposed around the axial cartridge extension (82).

4. A rotor assembly (70, 122, 142, 174) according to Claim 1 wherein the rotor assembly housing (22, 96, 130, 150, 176) comprises a bore (94, 128, 148) configured to receive the first end portion of the rotor shaft (34, 76, 91, 124, 144, 178) therein, wherein the floating bearing cartridge (56, 74, 93, 105, 126, 146) and the radially-compliant damping member (72, 95, 100, 120, 140) are each disposed within the bore.

## Patentansprüche

1. Rotoranordnung (70, 122, 142, 174) zur Anwendung mit einer Momentensteuerungsvorrichtung (20, 170) mit einem Rotoranordnungsgehäuse (22, 96, 130, 150, 176), wobei die Rotoranordnung Folgendes umfasst:
eine Rotorwelle (34, 76, 91, 124, 144, 178), die in dem Rotoranordnungsgehäuse drehbar angebracht ist;
eine Loslagerkartusche (56, 74, 93, 105, 126, 146), die um einen ersten Endteil der Rotorwelle angeordnet ist; und
ein zwischen der Loslagerkartusche und dem Rotoranordnungsgehäuse mechanisch gekoppeltes radial nachgiebiges Dämpfungsglied (72, 95, 100, 120, 140) entlang einer abgestrahlten Störungsbahn,
wobei das radial nachgiebige Dämpfungsglied (72, 95, 100, 120, 140) einen Haltering (90, 97, 102) umfasst, der fest mit dem Rotoranordnungsgehäuse (22, 96, 130, 150, 176) gekoppelt ist; **dadurch gekennzeichnet, dass** das radial nachgiebige Dämpfungsglied weiterhin mehrere im Wesentlichen ringförmige Federglieder (88, 99) umfasst, die um einen Innenumfang des Halterings (90, 97, 102) verteilt sind, zwischen dem Haltering und der Loslagerkartusche (56, 74, 93, 105, 126, 146) komprimiert sind und dazu konfiguriert sind, zwischen dem Haltering (90, 97, 102) und der Loslagerkartusche (56, 74, 93, 105, 126, 146) zu rollen, um eine axiale Dämpfung zwischen der Loslagerkartusche und dem Rotoranordnungsgehäuse (22, 96, 130, 150, 176) bei Betrieb der Momentensteuerungsvorrichtung zu gewährleisten.

2. Rotoranordnung (70, 122, 142, 174) nach Anspruch 1, wobei das radial nachgiebige Dämpfungsglied (72, 95, 100, 120, 140) um die Loslagerkartusche (56, 74, 93, 105, 126, 146) angeordnet ist.

3. Rotoranordnung (70, 122, 142, 174) nach Anspruch 1, wobei die Loslagerkartusche (56, 74, 93, 105, 126, 146) ein Lager (58, 78, 184) umfasst, das Folgendes umfasst:
einen Innenring (84), der fest mit dem ersten Endteil der Rotorwelle (34, 76, 91, 124, 144, 178) gekoppelt ist;
einen Außenring (86), der den Innenring allgemein umschreibt; und
mehrere Wälzkörper (78), die zwischen dem Innenring und dem Außenring angeordnet sind; und
eine axiale Kartuschenverlängerung (82), die fest mit dem Außenring gekoppelt ist, wobei das radial nachgiebige Dämpfungsglied (72, 95, 100, 120, 140) um die axiale Kartuschenverlängerung (82) angeordnet ist.

4. Rotoranordnung (70, 122, 142, 174) nach Anspruch 1, wobei das Rotoranordnungsgehäuse (22, 96, 130, 150, 176) eine Bohrung (94, 128, 148) umfasst, die zur Aufnahme des ersten Endteils der Rotorwelle (34, 76, 91, 124, 144, 178) darin konfiguriert ist, wobei die Loslagerkartusche (56, 74, 93, 105, 126, 146) und das radial nachgiebige Dämpfungsglied (72, 95, 100, 120, 140) jeweils in der Bohrung angeordnet sind.

## Revendications

1. Ensemble de rotor (70, 122, 142, 174) destiné à être utilisé à l'intérieur d'un dispositif de commande de la quantité de mouvement (20, 170), comportant un carter d'ensemble de rotor (22, 96, 130, 150, 176), l'ensemble de rotor comprenant :
un arbre de rotor (34, 76, 91, 124, 144, 178) monté à rotation à l'intérieur du carter d'ensemble de rotor ;
une cartouche de palier flottant (56, 74, 93, 105, 126, 146) disposée autour d'une première partie d'extrémité de l'arbre de rotor ; et
un organe amortisseur radialement flexible (72, 95, 100, 120, 140) accouplé mécaniquement entre la cartouche de palier flottant et le carter d'ensemble de rotor, tel que considéré le long d'un trajet de perturbation émise,
l'organe amortisseur radialement flexible (72, 95, 100, 120, 140) comprenant une bague de retenue (90, 97, 102) accouplée de manière fixe au carter d'ensemble de rotor (22, 96, 130, 150, 176) ;
**caractérisé en ce que** l'organe amortisseur radialement flexible comprend en outre
une pluralité d'organes ressort sensiblement annulaires (88, 99) dispersés autour d'une circonférence intérieure de la bague de retenue (90, 97, 102), comprimés entre la bague de retenue et la cartouche de palier flottant (56, 74, 93, 105, 126, 146) et configurés pour rouler entre la bague de retenue (90, 97, 102) et la cartouche de palier flottant (56, 74, 93, 105, 126, 146) afin d'assurer un amortissement axial entre la cartouche de palier flottant et le carter d'ensemble de rotor (22, 96, 130, 150, 176) lors du fonctionnement du dispositif de commande de la quantité de mouvement.

2. Ensemble de rotor (70, 122, 142, 174) selon la revendication 1, dans lequel l'organe amortisseur radialement flexible (72, 95, 100, 120, 140) est disposé autour de la cartouche de palier flottant (56, 74, 93, 105, 126, 146).

3. Ensemble de rotor (70, 122, 142, 174) selon la revendication 1, dans lequel la cartouche de palier flottant (56, 74, 93, 105, 126, 146) comprend : un palier (58, 78, 184) comprenant :
une bague intérieure (84) accouplée de manière fixe à la première partie d'extrémité de l'arbre de rotor (34, 76, 91, 124, 144, 178) ;
une bague extérieure (86) entourant généralement la bague intérieure ; et
une pluralité d'éléments de roulement (78) disposés entre la bague intérieure et la bague extérieure ; et
un prolongement de cartouche axial (82) accouplé de manière fixe à la bague extérieure, l'organe amortisseur radialement flexible (72, 95, 100, 120, 140) étant disposé autour du prolongement de cartouche axial (82).

4. Ensemble de rotor (70, 122, 142, 174) selon la revendication 1, dans lequel le carter d'ensemble de rotor (22, 96, 130, 150, 176) comprend un alésage (94, 128, 148) configuré pour recevoir la première partie d'extrémité de l'arbre de rotor (34, 76, 91, 124, 144, 178) dans ce dernier, la cartouche de palier flottant (56, 74, 93, 105, 126, 146) et l'organe amortisseur radialement flexible (72, 95, 100, 120, 140) étant chacun disposés à l'intérieur de l'alésage.
